Europäisches Patentamt

European Patent Office

Office européen des brevets

(19)

(11) Publication number: **0 089 425**
**B1**

# EUROPEAN PATENT SPECIFICATION

(45) Date of publication of patent specification: **11.12.85**

(21) Application number: **82301430.3**

(22) Date of filing: **19.03.82**

(51) Int. Cl.⁴: **B 01 J 20/28, B 01 J 21/18, B 01 J 37/00**

(54) Method for the preparation of integral shaped replications of shaped, porous and dissolvable materials for use as adsorbents in fixed bed adsorption processes.

(43) Date of publication of application:
**28.09.83 Bulletin 83/39**

(45) Publication of the grant of the patent:
**11.12.85 Bulletin 85/50**

(84) Designated Contracting States:
**AT BE CH DE FR GB IT LI NL SE**

(56) References cited:
**EP-A-0 002 251
DE-A-2 426 814
FR-A-2 172 755
US-A-3 090 094
US-A-3 446 593
US-A-3 676 173
US-A-3 891 574
US-A-3 964 933
US-A-4 025 689
US-A-4 039 480
US-A-4 077 908
US-A-4 090 978**

(73) Proprietor: **UOP Inc.**
**10 UOP Plaza Algonquin & Mt. Prospect Roads
Des Plaines Illinois 60016 (US)**

(72) Inventor: **Lester, George Ronald
318, Meacham Avenue
Park Ridge Illinois (US)**
Inventor: **Welsh, Lawrence Brian
2203 Lincolnwood Drive
Evanston Illinois (US)**

(74) Representative: **Hale, Stephen Geoffrey et al
J.Y. & G.W. Johnson Furnival House 14/18 High
Holborn
London WC1V 6DE (GB)**

## Description

This invention relates to a method for the preparation of an integral shaped replication of a shaped, porous and dissolvable substrate material which possesses physical dimensions, shape and an apparent bulk density (hereinafter referred to as ABD) suitable for use as an adsorbent in a fixed bed adsorption process. More specifically, the invention is concerned with the preparation of materials which may be used as supports for chemically active metals, as molecular sieves, or as adsorbents which may be themselves utilized in a fixed bed adsorption process.

In many instances, it is preferred to utilize various supports upon which catalytically active metals are deposited to form catalytic compositions of matter which are useful in catalyzing various chemical reactions. Usually it is preferred to employ supports which possess a relatively high surface area whereby a greater amount of catalytically active metal may be deposited on the surface. One such support which has been employed in the past comprises a refractory inorganic oxide such as alumina, especially gamma-alumina, which possesses the aforesaid high surface area. Other forms of alumina which also have been employed will include eta- and theta-alumina, these inorganic oxides also possessing relatively high surface areas which may range from 10 to 500 $m^2/g$. In addition to this type of catalyst support, it is also known from U.S. Patent 4,090,978 that electrocatalysts may be used in the preparation of electrodes for an electrochemical fuel cell. The support for an electrochemical catalyst employed in that patent uses a carbonaceous pyropolymer powder or particle upon which is impregnated a catalytic metal. However, as stated, the support is in particle form which is in contradistinction to the supports of the present invention which are shaped, that is, said supports possess a definite shape, for example as a sphere, plate, fiber or monolith. The catalytic particles are blended with polytetrafluoroethylene (PTFE) powder, a binding material, and thereafter a sheet containing the catalyst is formed by a calendering or rolling operation following which the alumina is then catalytically leached from the electrode sheet. However, the formation of the sheet requires a PTFE binder and is not a replication of any starting shape, but is formed by a calendering operation. The electrocatalyst powder of this patent, after being combined with a binder, is shaped into the desired form by means of a mold press or by any other technique possessing extremely different properties than those which are possessed by the integral shaped replications of the present invention. For example, the pore structure as measured by nitrogen adsorption or desorption, or by mercury intrusion, would be very different, inasmuch as it would be changed by the presence of a binder material and by the loss of that pore structure which results from individual particles being physically bonded together. Other differences between the particles of the patent and the integral shaped replications of the present invention would be in chemical properties, electrical properties, terminal properties and mechanical properties. The chemical properties of the two composites would differ substantially, inasmuch as the presence of the binders would modify the chemical properties of the powder; the terminal properties would differ in that by using a binder with the powder, the use of a support would be limited to reactions occurring at temperatures well below 300°C as opposed to the integral shaped replications which would be stable at temperatures in excess of 500°C in non-oxidizing environments, or in crush strength in which the crush strength of the integral shaped replications is determined by the nature of the carbonaceous pyropolymer as opposed to the composite requiring a binder to hold its shape, the crush strength of such a material as being primarily determined by the crush strength of the binder material. While the patent demonstrates that micron size pyropolymer particles can be prepared from individual alumina particles which are made up of individual alumina crystalites which are strongly and chemically bonded together, the formation of relatively large spheres, plates, rods etc. which are made up of aggregates of such particles could be successfully leached after deposition of a carbonaceous pyropolymeric coating comprising recurring units containing at least carbon and hydrogen atoms to yield a macroscopic integral shaped replication of the original inorganic shaped structure.

In addition, U.S. Patent 3,964,933 describes carbon particles which may be used for electrodes and a method for the manufacture thereof. However, the composition comprises a non-conductive oxide having a deposit of carbon, and not a carbonaceous pyropolymer, on the surface. The amount of carbon deposited on the surface of the oxide may be altered by extracting or leaching a portion of the oxide to provide a material which contains from 50 to 90% by weight of carbon, the remainder of the material consisting of the oxide. As will hereinafter be shown in greater detail, this is in contradistinction to the composition of the present invention.

The use of various supports for catalytically active metals constitutes an important variation by which the reactions of various catalysts can be modified or improved. As hereinbefore set forth, in many instances the surface area of the support upon which the catalytically active metal is deposited is important, a relatively large surface area being a desirable characteristic of the support. The catalytically active composites are useful in a wide variety of chemical reactions and have been used in reforming reactions and hydrocracking reactions, amongst others. It is contemplated within the scope of this invention that the supports which are prepared according to the method of the invention may be used as a catalyst base such as a support for phosphoric acid to form solid phosphoric acid and thus be used in polymerization reactions, as a catalyst support for ammonia synthesis, as a support for a metal phthalocyanine complex which would form a catalyst useful for the sweetening of petroleum products such as gasoline, or as a support for an immobilized enzyme system, amonst other uses. The shaped replications which are prepared according to the method of the invention may be in any form such as those hereinbefore set forth in greater detail, said shapes possessing desirable characteristics, e.g. of surface area, pore volume, ABD and crushing strength, said integral shaped replications thereby being useful in fixed bed adsorption processes without undergoing physical deterioration to form powders, dust or fines and thus limit the use of such a composite.

According to the invention there is provided a method for the preparation of an integral shaped replication of a shaped, porous and dissolvable substrate material which possesses physical dimensions, shape and an ABD suitable for use as an adsorbent in a fixed bed adsorption process, the replication duplicating the physical shape and dimensions of the substrate material and a substantial portion of the pore structure thereof, which replication consists essentially of a carbonaceous pyropolymer possessing recurring units containing at least carbon and hydrogen atoms and which replication has an ABD which is from 25 to 100% of the ABD of the substrate material, characterised in that the method comprises the steps of:

(a) treating the substrate material with an organic pyrolyzable precursor compound in a reducing atmosphere at a temperature in the range from 500° to 1200°C to pyrolyze the organic compound to form the carbonaceous pyropolymer possessing recurring units containing at least carbon and hydrogen atoms in the pore structure of the substrate material,

(b) continuing the treatment of step (a) until the total accumulation of the carbonaceous pyropolymer in the pore structure of the substrate material is sufficient to result in a replication which possesses a crush strength of from 0.5 to 14 kg, and

(c) recovering the integral shaped replication comprising a carbonaceous pyropolymer possessing recurring units containing at least carbon and hydrogen atoms by leaching the substrate material from the product of step (b) by contacting said product with a dissolving agent for the substrate material under conditions selected to dissolve substantially all of the substrate material.

The steps (a)—(c) in the method of the invention may be followed by the steps of:

(d) depositing at least one refractory oxide on each surface of the integral shaped replication comprising the carbonaceous pyropolymer;

(e) removing the carbonaceous pyropolymer by oxidation; and

(f) recovering the resulting refractory oxide shaped replication.

In one preferred embodiment the substrate material is an alumina, the organic pyrolyzable precursor compound is benzene and the dissolving agent comprises phosphoric acid. In such an embodiment aluminium oxide may preferably be deposited on each surface of the carbonaceous pyropolymer, the carbonaceous pyropolymer removed by subjecting the composite to oxidation at a temperature in the range from 200° to 800°C in an atmosphere of air, and the resulting refractory oxide shaped replication recovered.

The integral shaped replication supports obtained by the method of the invention comprise integral shaped replications of particle aggregates and may be prepared by treating an inorganic substrate material of the type hereinafter set forth in greater detail in any desired shape, such as spheres, plates, pellets, rods, fibers or monoliths, with the pyropolymer precursor. The amount of carbonaceous pyropolymer which is deposited on the surface of the substrate material will be sufficient to duplicate the physical shape and dimensions of the substrate material as well as a substantial portion of the pore structure thereof. In addition, the carbonaceous pyropolymer which forms the integral shaped replication will possess an ABD which is from 25 to 100% of the ABD of the substrate material and the replication will possess an average crush strength which may range from 0.5 to 14 kg or more, the crush strength being dependent upon the size and shape of the replication.

In preferred embodiments of the present invention, the inorganic substrate material which acts as a support has a surface area of from 1 to 500 $m^2/g$ as well as a pore structure which includes both micropores and macropores. For purposes of this invention, the term "micropores" denotes those pores of 300 Å or less diameter, while macropores are those greater than 300 Å in diameter. The pore strength of the shaped replications will substantially duplicate the pore structures of the substrate material, this being especially true of the pore structure as to macropores. In addition, the integral shaped replication will possess the original pore volume of the substrate material and, in addition, the pore volume which was occupied by the substrate will be now available to the integral shaped replication after removal of the substrate material. Illustrative examples of substrate materials include refractory oxides such as alumina in various forms, e.g. gamma-alumina, eta-alumina and theta-alumina, or mixtures of inorganic refractory oxides, e.g. zeolites, silica-alumina, silica-zirconia, zirconia-titania and zirconia-alumina. As hereinbefore set forth, the substrate material can have any desired shape. The particular shape of the substrate material can be obtained by any method known in the art, e.g. marumerizing, pelletizing or modulizing, whereby a substrate material can be obtained which possesses definite pore size.

In one method of preparing the shaped replication, the substrate material, e.g. a refractory oxide, is heated to a temperature of from 400° to 1200°C in a reducing atmosphere containing an organic pyrolyzable precursor compound for the carbonaceous pyropolymer.

The organic pyropolymer precursors preferably used for the purposes of this invention are aliphatic hydrocarbons, aliphatic halogen derivatives, aliphatic oxygen derivatives, aliphatic sulfur derivatives, aliphatic nitrogen derivatives, organometallic compounds, alicyclic compounds, aromatic compounds and heterocyclic compounds. Of the aliphatic hydrocarbons, the more common classes which may be utilized are alkanes, alkenes, alkynes, and alkadienes. Ethane, propane, butane and pentane are among the alkanes which may be successfully used. Similarly, alkenes which can be used successfully include ethene, propene, 1-butene, 2-butene and 1-pentene. Alkynes which may be successfully used include ethyne, propyne, 1-butyne, 2-butyne, 1-pentyne and 1-hexyne. 1,3-Butadiene and isoprene are among the alkadienes which may be utilized. Among the aliphatic halogen derivatives which may be utilized are monohaloalkanes such as chloromethane, bromoethane, 1-iodopropane and 1-chlorobutane. Polyhaloalkanes such as carbon tetrachloride, chloroform, 1,2-dichloroethane and 1,2-dichlorobutane may also be utilized. An unsaturated halo compound which may be utilized is chloroprene.

The aliphatic oxygen derivatives which may be used include the classes of alcohols, ethers, halohydrides and alkene oxides, saturated aldehydes and ketones, unsaturated aldehydes and ketones, ketenes, acids, esters, salts and carbohydrates. Alcohols which may be utilized include ethanol, 2-butanol, 1-propanol, glycols (e.g. 1,3-propanediol) and glycerol. Ethers which may be utilized include ethyl ether and isopropyl ether. Appropriate halohydrins and alkene oxides include ethylene chlorohydrin, propylene chlorohydrin, ethylene oxide and propylene oxide. Suitable saturated aldehydes and ketones include formaldehyde, acetaldehyde, acetone and ethyl methyl ketone. Unsaturated aldehydes and ketones which may be used include propenol, trans-2-butenal and butenone. Ketene has also been successfully used. Likewise, formic acid, acetic acid, oxalic acid, acrylic acid, chloroethanoic acid, formic anhydride and formyl chloride may also be utilized. Esters such as methyl formate, ethyl formate and ethyl acetate may also be used. Salts such as sodium formate, potassium acetate and calcium propionate may be utilized, as may a variety of carbohydrates.

The broad classification of aliphatic sulfur derivatives which may be used may be broken down into the sub-classes of alkanethiols, alkylthioalkanes, sulfonic acids, and alkyl sulfates and alkyl metallic sulfates. Suitable among the alkanethiols are ethyl mercaptan and n-propyl mercaptan. Among the alkylthioalkanes usable are the thioethers, alkyl sulfides, methyl sulfide, ethyl sulfide and methyl propyl sulfide. Ethyl sulfonic acid and n-propyl sulfonic acid are sulfonic acids which may also be successfully used. Ethyl sulfate and sodium lauryl sulfate are also appropriate for use.

The broad class of aliphatic nitrogen derivatives which may be used may be broken down into the subclasses of nitroalkanes, amides, amines, nitriles and carbylamines. Nitroethane and 1-nitropropane are examples of suitable nitroalkanes while acetamide and propionamide are among the appropriate amides. Amines such as dimethylamine and ethylmethylamine, nitriles such as acetonitrile and propionitrile, and carbylamines such as ethyl isocyanide may also be used. Organometallic compounds such as tetraisopropyl titanate, tetrabutyl titanate and 2-ethylhexyl titanate may also be used.

Particularly preferred for use as the organic pyrolyzable precursor compound in the method of this invention are alicyclic compounds. Foremost among these are cyclohexane and cyclohexene. Aromatic compounds, including the subclasses of hydrocarbons, halogen compounds, oxygen derivatives, ethers, aldehydes, ketones, quinones, aromatic acids, aromatic sulfur derivatives and aromatic nitrogen compounds, may also be utilized. Among the many suitable aromatic hydrocarbons, benzene, naphthalene, anthracene, and toluene have been successfully utilized. Benzyl chloride and benzal chloride are appropriate halogen compounds while phenol, o-cresol, benzyl alcohol and hydroquinone are among the suitable derivatives. Ethers, such as anisole and phenetole, and aldehydes, ketones and quinones, such as benzaldehyde, acetophenone, benzophenone, benzoquinone and anthraquinone, may also be used. Aromatic acids such as benzoic acid, phenylacetic acid, and hydrocinnamic acid may be utilized while the aromatic sulfur derivative benzene sulfonic acid will also serve successfully. The aromatic nitrogen compounds nitrobenzene, 1-nitronaphthalene, aminobenzene and 2-amino toluene may also be successfully used. Among heterocyclic compounds which may be used, 5-membered ring compounds such as furan, proline, coumarone, thionaphthene, indole, indigo and carbazone may be mentioned. 6-Membered ring compounds such as pyran, coumarin and acridine may also be utilized.

As can be seen, an extremely wide latitude can be exercised in the selection of the organic pyrolyzable precursor compound, since virtually any organic material that can be vaporized, decomposed and polymerized on the refractory oxide by heating will suffice. The resultant carbonaceous pyropolymer will possess recurring units containing at least carbon and hydrogen atoms; however, depending upon the pyropolymer precursor which has been selected, the pyropolymer may also contain other atoms such as nitrogen, oxygen, sulfur, phosphorus or metals.

In another method of preparing the shaped replication the substrate material, e.g. a refractory inorganic oxide, is impregnated with a solution of a carbohydrate material, e.g. dextrose, sucrose, fructose or starch, and thereafter the impregnated support is dried and then subjected to a pyrolysis temperature in the range from 400 to 1200°C, whereby a carbonaceous pyropolymer possessing recurring units containing at least carbon and hydrogen atoms and having an ABD of from 25 to 100% of the ABD of the substrate material is formed in at least a monolayer on the surface of the substrate material.

Whichever method is used, the resulting composite will possess the carbonaceous pyropolymer on the surface of the substrate material in a sufficient quantity so that the carbonaceous pyropolymer possesses an average crush strength of from 0.5 to 14 kg as well as an ABD of from 25 to 100% of the ABD of the substrate material. Preferably, the carbonaceous pyropolymer contains from 15 to 50% by weight of carbon. In addition, the pore structure of the carbonaceous pyropolymer will duplicate a substantial portion of the pore structure, both macropore and micropore in nature, of the substrate material.

Following this, the substrate material is chemically leached from the carbonaceous pyropolymer. The leaching is effected by treating the composite with a dissolving material which in the case of an inorganic oxide substrate material is conveniently either an acid or a base and results in the formation of a high surface area carbonaceous pyropolymer support which is a shaped replication of the original shaped substrate material. The leaching of inorganic oxide substrate materials may be effected over a wide range of temperatures, e.g. from ambient temperature (20°—25°C) up to 250°C or more, for a period of time which may range from less than 1 hour up to 72 hours or more. It is to be understood that the operating parameters of the leaching step will vary over a wide range and will be dependent upon a combination of factors such as time, temperature and strength of the leaching solution. Examples of acids and bases which may be utilized to leach out the inorganic oxide substrate material are inorganic acids, e.g. phosphoric acid, sulfuric acid, nitric acid and hydrochloric acid, organic acids, e.g. methyl sulfonic acid, ethyl sulfonic acid, propyl sulfonic acid and toluene sulfonic acid, and strong bases, e.g. sodium hydroxide, potassium hydroxide, lithium hydroxide, rubidium hydroxide and cesium hydroxide. It is to be understood that aforementioned dissolving materials are only representative of the class of compounds which may be used and that any chemical which is capable of removing the refractory inorganic oxide while retaining the high surface area of the carbonaceous pyropolymer may be used.

As hereinbefore set forth the resulting shaped replications will possess a high surface area and a desirable pore volume and ABD, as well as possessing a high crush strength. They may therefore be utilized as a support for catalysts, immobilized enzymes, or even as molecular sieves and adsorbents.

The carbonaceous pyropolymer replication may be used as such or, if so desired, it may be used as a support upon which at least one inorganic oxide may be deposited. The carbonaceous pyropolymer replications may be impregnated with solutions containing the desired refractory oxide or a combination of refractory oxides. The impregnation of the carbonaceous pyropolymer structures may be effected by treating said structures with either a solution containing a soluble salt of the desired metal or a sol thereof. For example, the carbonaceous pyropolymer, replications may be impregnated with an alumina sol, a zirconium oxide sol, a titanium oxide sol or mixtures thereof in order to produce a composition comprising a shaped replication of particle aggregates comprising the carbonaceous pyropolymer atoms having at least one refractory oxide deposited on all surfaces thereof. The refractory oxides which may be utilized comprise the oxides of aluminium, boron, cerium, barium, copper, nickel, chromium, molybdenum, zirconium, titanium, hafnium, vanadium, tungsten, magnesium, silicon, tin and lead. As an alternative method of impregnating the carbonaceous pyropolymer replications, it is possible to utilize an aqueous solution of a salt of the desired metal which may then be converted to the corresponding oxide by conventional means such as oxidation. Some representative examples of salts of the metals which may be used are organic such as aluminium acetate, aluminium propionate, aluminium succinate, aluminium sulfate, zirconium acetate, zirconium propionate, zirconium succinate, zirconium sulfate, titanium acetate, titanium propionate, titanium succinate, titanium sulfate, silicon acetate, silicon propionate, silicon succinate and silicon sulfate. In addition, metalorganic complexes such as aluminium acetylacetonate, silicon acetylacetonate, zirconium acetylacetonate, titanium acetylacetonate cerium acetylacetonate, barium acetylacetonate copper acetylacetonate, nickel acetylacetonate, chromium acetylacetonate, molybdenum acetylacetonate or complexes which are formed between the aforementioned metals and ethylene diamine tetraacetic acid may also be used to impregnate the carbonaceous pyropolymer replications, said soluble salts and complexes being subsequently converted to the desired metallic oxide by conventional means such as heat treatment or oxidation at an elevated temperature. It is to be understood that the aforementioned metals and salts thereof are only representative of the type of compounds which may be used to impregnate the carbonaceous pyropolymer structure. The resulting composition will possess a modified pore structure, its final pore structure being determined by the combination of the pore structure of the starting substrate material, the properties of the carbonaceous pyropolymer replication, the thickness of the impregnated refractory oxide layer(s), and the fact that all surfaces of the carbonaceous pyropolymer are coated with the refractory oxide. In many instances, the surface area of the original starting support normally will be increased, inasmuch as both sides of the carbonaceous pyropolymer replications are now coated with the refractory oxide.

If so desired, the compositions comprising the shaped replications having at least one refractory oxide deposited on all surfaces thereof may be utilized as catalysts by having a catalytically active metal either impregnated on the refractory oxide or sealed into the refractory oxide. The addition of the catalytically active metal may be effected by utilizing either a co-impregnation, a prior impregnation, or a subsequent impregnation of the carbonaceous pyropolymer replication. Examples of catalytically active metals which may be used include platinum, palladium, rhodium, ruthenium, germanium, tin and nickel, either alone or in combinations of two or more thereof. For example, the impregnation may be effected by treating the carbonaceous pyropolymer replication with an aqueous or organic solution of the desired metal or combination of metals in an amount sufficient to deposit at least one catalytically active metal on the surface of the carbonaceous pyropolymer replication in an amount ranging from 0.1 to 20% by weight. For example, a mixture of platinum and rhenium, platinum and ruthenium, platinum and tungsten, platinum and nickel, platinum and rhodium, platinum and lead, platinum and germanium, palladium and rhenium, palladium and rhodium, palladium and tungsten, palladium and nickel, palladium and ruthenium, palladium and lead, or palladium and germanium may be impregnated on the carbonaceous pyropolymer replication. The solution which is utilized to impregnate the carbonaceous pyropolymer replication is preferably aqueous in nature, some specific examples of these aqueous solutions being solutions of chloroplatinic acid, chloroplatinous acid, bromoplatinic acid, sodium platinate, potassium platinate, lithium platinate, platinic chloride and platinous chloride, as well as solutions of corresponding compounds of palladium, ruthenium, tin, tungsten, germanium and rhodium, and mixtures thereof. After impregnation of the structure, which may be carried out for from 0.5 hour to 10 hours or more, the solvent may be removed by heating to a temperature in the range of from 100 to 400°C, the temperature being that which is sufficient to evaporate said solvent and leave the metal or mixtures of metals impregnated on the surface of the carbonaceous pyropolymer replication. Thereafter the structure may then be dried at elevated temperatures e.g. ranging from 100 to 200°C, for a period of time e.g. ranging from 2 to 6 hours or more. Thereafter, the metal impregnated carbonaceous pyropolymer structure is subjected to a reducing step in the presence of a reducing atmosphere or medium such as hydrogen at elevated temperature, e.g. from 200 to 600°C or more, preferably 250 to 400°C, for a period of time, e.g. ranging from 0.5 or 1 hour up to 4 hours or more, whereby the metallic compound is reduced to the metal in the form of particles. By utilizing a metallic impregnation prior to impregnating the carbonaceous pyropolymer support with a solution or sol corresponding to the refractory oxide, the catalytically active metal will be sealed into the refractory oxide layer when the latter is formed. Conversely speaking, the metal impregnation step herein described may be effected using a co-impregnation technique or subsequently impregnating the composition in which the carbonaceous pyropolymer replication contains at least one refractory inorganic oxide on all surfaces thereof, thereby having the catalytically active metals impregnated on the surface of the refractory oxide.

If so desired, following the deposition of at least one refractory oxide on all surfaces of the carbonaceous pyropolymer replication, either with or without the presence of a catalytically active metal, the aforesaid carbonaceous pyropolymer may be removed, thus leaving a refractory oxide or mixture of refractory oxides which is a shaped replication of the carbonaceous pyropolymer replication but which possesses a surface area which may be up to several times the surface area of the original substrate material. The removal of the carbonaceous pyropolymer may be accomplished by treating the shaped replication composition of matter at an elevated temperature in the presence of an oxidizing agent such as an oxygen-containing gas. This treatment may be effected at a temperature ranging from 200 to 800°C with the concentration of the oxygen in the atmosphere ranging from 0.1 to 21% by volume. The removal of the carbonaceous pyropolymer may also be effected over a period of time ranging from less than 1 hour to 10 hours or more in duration, the operating parameters of temperature, time, and oxygen content being dependent upon the thickness and extent of graphitization of the carbonaceous pyropolymer as well as the physical and chemical properties thereof. For example, one method of effecting the removal of the carbonaceous pyropolymer is to treat the composition at a temperature of 200°C for a predetermined period of time and thereafter to increase the temperature at a predetermined rate until the upper portion of the operating range has been reached and maintain the temperature at this point for a period of time sufficient to remove all of the aforesaid carbonaceous pyropolymer. Thereafter the refractory oxide shaped replication may be used, e.g. as a catalyst support, molecular sieve or adsorbent, or if it contains a catalytically active metal such as those hereinbefore set forth, as a catalyst per se.

The shaped replications may be prepared in any suitable manner including both batch and continuous types of operations. For example, when a batch type of operation is employed an inorganic substrate material such as an alumina of the type hereinbefore set forth in greater detail may be dried and placed in a reducing atmosphere. Following this, the organic pyrolyzable precursor compound also in a reducing atmosphere may be passed over the inorganic substrate material at an elevated temperature of from 400 to 1200°C for a period of time sufficient to pyrolyze the precursor compound while impregnating the substrate material. Alternatively, the inorganic substrate material such as a refractory oxide may be impregnated with an aqueous solution of a carbohydrate such as sucrose or dextrose, the impregnated substrate material dried at an elevated temperature, and thereafter the dried impregnated substrate material pyrolyzed at a temperature in the range hereinbefore set forth for a predetermined period of time sufficient to form at least a monolayer of the carbonaceous pyropolymer on the substrate material. It is to be understood within the scope of this invention that the thickness of the carbonaceous pyropolymer on the substrate material may vary from one monolayer to several monolayers depending on the amount of precursor compound used as well as on the operating parameters of time and temperature.

After recovering the resulting composite, it is then subjected to a leaching step in an appropriate apparatus, for example by immersion in an acid such as a 96% phosphoric acid solution at an elevated temperature, e.g. from 50° up to 150°C or more, for a predetermined period of time. Following the leach step the shaped replication of particle aggregates comprising the carbonaceous pyropolymer is recovered, washed and dried and optionally treated for deposition of a refractory oxide and/or a catalytically active metal and optional removal of the carbonaceous pyropolymer itself, as hereinbefore set forth.

In addition to the batch type of operation hereinbefore discussed, the shaped replication may also be prepared in a continuous manner of operation. For example, when such a type of operation is to be employed an inorganic substrate material, preferably possessing a high surface area, is continuously passed through a pyrolysis zone wherein it is contacted with an organic pyrolyzable precursor compound at an elevated temperature in the range of from 400° to 1200°C whereby a carbonaceous pyropolymer containing recurring carbon and hydrogen atoms is deposited on the surface of said substrate material. By varying the operating parameters of time, temperature and particular pyropolymer precursor, the thickness of the carbonaceous pyropolymer on the surface of the inorganic substrate material can be adjusted to a predetermined size. After the predetermined depth of the carbonaceous pyropolymer on the surface of the substrate material has been attained, it is recovered from the pyrolysis zone and continuously charged to a leaching bath. In the leaching bath the substrate material is leached from the composite, utilizing for example in the case of an inorganic oxide substrate material an acid such as phosphoric acid or a strong base such as sodium hydroxide in an appropriate strength at elevated temperatures within the range hereinbefore set forth. Upon completion of the leach the carbonaceous pyropolymer replication is continuously withdrawn from said bath and, in one embodiment of the invention, continuously charged to either a sol or a solution of a metal salt wherein it is coated with a salt corresponding to at least one refractory metal oxide, all surfaces of the carbonaceous pyropolymer replication being coated. Again, as in the case of the pyrolysis step, the thickness of the layer of one refractory oxide or a mixture of refractory oxides may be varied by predetermining the operating parameters of time and solution strength of the soluble salt of the transition metal. After passage through the bath or sol, the composition comprising a shaped replication of particle aggregates comprising a carbonaceous pyropolymer having at least one refractory oxide or precursor deposited on all surfaces thereof is continuously withdrawn and passed to a drying oven wherein the solvent such as water is removed. Thereafter, if desired, the composition may be recovered and used, e.g. as a catalyst base, adsorbent or molecular sieve, or it may be continuously passed to an oxidation zone wherein it is subjected to an oxidation step in the presence of an oxidizing agent such as water or an oxygen-containing gas such as air or oxygen at an elevated temperature in the range of from 200 to 800°C, whereby the carbonaceous pyropolymer structure is removed, thus leaving a shaped replication of the refractory metal oxide or mixture of refractory metal oxides possessing essentially the same shape as the original inorganic support but also possessing a surface area several times that of the original support.

In another embodiment of the invention, after formation of the carbonaceous pyropolymer replication by leaching out the inorganic substrate material the replication may then be impregnated with a catalytically active metal by continuous passage through an aqueous solution of such metal prior to passage through the solution or sol wherein at least one refractory oxide is deposited on the surface. Another variation consists in passing the refractory oxide coated carbonaceous pyropolymer replication through an impregnating solution of the catalytically active metal and thereafter drying the impregnated composition. In both instances the impregnated composition is continuously passed through a reducing zone wherein it is contacted with hydrogen at an elevated temperature to reduce the catalytically active metal to the elemental form.

The following Examples illustrate the invention without limiting it.

### Example I

A shaped replication support was prepared by calcining 3.2 mm diameter alumina spheres having a surface area of 147 m²/g, a pore volume of 0.42 mg/liter and an ABD of 0.377 g/ml at a temperature of 482°C for a period of 2 hours. Following this the spheres were placed in an inert atmosphere and a carbonaceous pyropolymer layer was deposited on these spheres by pyrolyzing cyclohexane in the presence of said spheres at a temperature of 788°C in an inert atmosphere.

The resulting composite material was then leached by immersion in a 96% phosphoric acid solution at a temperature of 160°C for a period of 24 hours. The resulting shaped replication of particle aggregates comprising a carbonaceous pyropolymer structure possessing recurring units of carbon and hydrogen atoms was analyzed and it was found that the alumina content was only 0.27 wt.%, thus indicating that essentially all of the alumina had been removed in the leach. The carbonaceous pyropolymer structure in the form of spheres was found to have a BET surface area of 656 m²/g, an ABD of 0.17 g/ml and a crushing strength of 7 kg. To further illustrate the differences between the initial inorganic support and the shaped replication in the form of a carbonaceous pyropolymer structure, the shape of which was a replication of the shape of the initial refractory inorganic oxide support, various characteristics are set forth in the following table.

| | Feed | Product |
|---|---|---|
| Composition | Alumina | Carbonaceous Pyropolymer |
| Bulk Density | 0.38 g/ml | 0.17 g/ml |
| Size | 3.2 mm Spheres | 3.2 mm Spheres |
| Pore Volume, <600 Å | 1.10 ml/g | 1.84 ml/g |
| Pore Volume, >600 Å | 0.17 ml/g | 1.26 ml/g |
| Pore Volume/Bed Volume | | |
| <600 Å | 0.42 ml/ml | 0.31 ml/ml |
| >600 Å | 0.07 ml/ml | 0.21 ml/ml |
| Total | 0.49 | 0.52 |
| Surface Area, m²/g | 147 m²/g | 656 m²/g |
| Surface Area/Bed Volume | 55.9 m²/ml | 111.5 m²/ml |
| Volume or Solid/Bed Volume | 0.12 ml/ml | 0.074 ml/ml |

It is therefore readily apparent from the above table that the shaped replication of particle aggregates which comprised a carbonaceous pyropolymer containing at least recurring carbon and hydrogen atoms possessed a bulk density approximately $\frac{1}{2}$ of the bulk density of the original support, was of the same size, had an increased pore volume and a surface area which was approximately 4.5 times greater than that of the original support. The increased surface area thus renders the support of greater value for the deposition of catalytically active metals for further use as a catalyst in various hydrocarbon reactions.

Example II

The shaped replication of particle aggregates comprising a carbonaceous pyropolymer possessing recurring units of carbon and hydrogen atoms which was prepared according to the above example was then impregnated with a refractory oxide. The impregnation was effected by heating the shaped replication under vaccum at a temperature of about 100°C to drive off adsorbed water. After allowing the particle aggregates to cool, the particle aggregates which were in the form of spheres were subjected to multiple impregnations with a 100% solution of titanium-2-propoxide under vacuum. After allowing the impregnation to occur for a period of about 2 hours, the excess solution was drained and the spheres were washed with 2-propanol under a nitrogen atmosphere. After washing with the 2-propanol, the spheres were then washed in air and subjected to hydrolysis to form a composition of matter comprising a shaped replication of particle aggregates comprising a carbonaceous pyropolymer possessing recurring units of carbon and hydrogen atoms having a titanium dioxide coating deposited on the surface thereof.

Example III

The titanium dioxide coated spheres which were prepared according to the above paragraph were then subjected to an oxidation procedure in which the spheres were heated in an oxygen containing atmosphere at a temperature of from 540° to 750°C for a period of about 8 hours. At the end of this period the spheres were recovered and analyzed for crystal structure. The titanium dioxide spheres were found to comprise a mixture of anatase and rutile, not titanium, titanium carbide, or carbon being found by this analysis. It is therefore apparent that by utilizing the process of this invention it is possible to obtain a shaped replication of an initial support, said shaped replication comprising either particle aggregates consisting of carbonaceous pyropolymer possessing recurring units of carbon and hydrogen atoms depending upon the pyropolymer precursor which is employed; a refractory oxide coated shaped replication of particle aggregates, the thickness of the refractory oxide being dependent upon the particular refractory oxide which is employed as well as the number of impregnations; or a shaped replication of a refractory oxide alone, the carbonaceous pyropolymer having been removed by conventional oxidation treatments.

## Claims

1. A method for the preparation of an integral shaped replication of a shaped, porous and dissolvable substrate material which possesses physical dimensions, shape and an apparent bulk density (ABD) suitable for use as an adsorbent in a fixed bed adsorption process, the replication duplicating the physical shape and dimension of the substrate material and a substantial portion of the pore structure thereof, which replication consists essentially of a carbonaceous pyropolymer possessing recurring units containing at least carbon and hydrogen atoms and which replication has an ABD which is from 25 to 100% of the ABD of the substrate material, characterised in that the method comprises the steps of:

(a) treating the substrate material with an organic pyrolyzable precursor compound in a reducing atmosphere at a temperature in the range from 400° to 1200°C to pyrolyze the organic compound to form the carbonaceous pyropolymer possessing recurring units containing at least carbon and hydrogen atoms in the pore structure of the substrate material,

(b) continuing the treatment of step (a) until the total accumulation of the carbonaceous pyropolymer in the pore structure of the substrate material is sufficient to result in a replication which possesses a crush strength of from 0.5 to 14 kg, and

(c) recovering the integral shaped replication comprising a carbonaceous pyropolymer possessing recurring units containing at least carbon and hydrogen atoms by leaching the substrate material from the product of step (b) by contacting said product with a dissolving agent for the substrate material under conditions selected to dissolve substantially all of the substrate material.

2. A method as claimed in claim 1, characterised in that the substrate material is a high-surface area inorganic oxide selected from alumina, silica and mixtures thereof.

3. A method as claimed in claim 1 or 2, characterised in that the organic pyrolyzable precursor compound is selected from benzene, cyclohexane, dextrose and mixtures thereof.

4. A method as claimed in any of claims 1 to 3, characterised in that step (c) is followed by the step of

(d) depositing at least one refractory oxide on each surface of the integral shaped replication.

5. A method as claimed in claim 4, characterised in that step (d) is followed by the step of

(e) removing the carbonaceous pyropolymer by oxidation, thereby forming a refractory oxide shaped replication which is recovered.

6. A method as claimed in claim 4 or 5, characterised in that the refractory oxide is selected from alumina, silica, titanium oxide, zirconium oxide and mixtures thereof.

7. A method as claimed in any of claims 4 to 6, characterised in that at least one catalytically active metal is deposited on the surface of the carbonaceous pyropolymer or the refractory oxide.

8. A method as claimed in claim 7, characterised in that the catalytically active metal is selected from platinum, palladium, rhodium and mixtures thereof.

9. The use of a replication, prepared according to the method of claims 1 to 8, as catalyst support, molecular sieve or adsorbent.

## Revendications

1. Un procédé de préparation d'une réplique, dans sa forme intégrale, d'un matériau support façonné, poreux et dissoluble, qui possède des dimensions physiques, une forme et une masse volumique apparente (MVA) convenables pour son utilisation comme adsorbant dans un procédé d'adsorption à lit fixe, la réplique assurant une duplication de la forme et des dimensions physiques du matériau support et d'une portion substantielle de la structure poreuse de celui-ci, ladite réplique étant constituée essentiellement d'un pyropolymère carboné comportant des motifs récurrents contenant au moins des atomes de carbone et d'hydrogène et ladite réplique ayant une MVA comprise entre 25 et 100% de la MVA du matériau support, caractérisé en ce que le procédé comprend les étapes de:

(a) traitement du matériau support par un composé organique précurseur pyrolysable, dans une atmosphère réductrice, à une température dans l'intervalle de 400°C à 1200°C. Pyrolyse du composé organique pour former le pyropolymère carboné comportant des motifs récurrents contenant au moins des atomes de carbone et d'hydrogène dans la structure poreuse du matériau support,

(b) prolongation du traitement de l'étape (a) jusqu'à ce que l'accumulation totale de pyropolymère carboné dans la structure poreuse de matériau support soit suffisante pour résulter en une réplique qui possède une résistance à l'écrasement comprise entre 0,5 et 14 kg, et

(c) récupération dans sa forme intégrale, de la réplique comprenant un pyropolymère carboné comportant des motifs récurrents contenant au moins des atomes de carbone et d'hydrogène, en lessivant le matériau support du produit de l'étape (b) en mettant en contact ledit produit avec un agent de dissolution du matériau support, dans des conditions choisies pour dissoudre essentiellement tout le matériau support.

2. Un procédé selon la revendication 1, caractérisé en ce que le matériau support est un oxyde minéral de surface extérieure élevée, choisi parmi l'alumine, la silice et des mélanges de celles-ci.

3. Un procédé selon la revendication 1 ou la revendication 2, caractérisé en ce que le composé organique précurseur pyrolysable est choisi parmi le benzène, le cyclohéxane, le dextrose et des mélanges de ceux-ci.

4. Un procédé selon l'une quelconque des revendications 1 à 3, caractérisé en que l'étape (c) est suivie de l'étape de:

(d) dépôt d'au moins un oxyde réfractaire sur chaque face de la réplique dans sa forme intégrale.

5. Un procédé selon la revendication 4, caractérisé en ce que l'étape (d) est suivie de l'étape d':

(e) élimination du pyropolymère carboné par oxydation, en formant de ce fait une réplique façonnée d'oxyde réfractaire, qui est récupérée.

6. Un procédé selon la revendication 4 ou la revendication 5, caractérisé en ce que l'oxyde réfractaire est choisi parmi l'alumine, la silice, l'oxyde de titane, l'oxyde de zirconium et des mélanges de ceux-ci.

7. Un procédé selon l'une quelconque des revendications 4 à 6, caractérisé en ce qu'on dépose au moins un métal, catalytiquement actif, sur la surface du pyropolymère carboné ou de l'oxyde réfractaire.

8. Un procédé selon la revendication 7, caractérisé en ce que le métal catalytiquement actif est choisi parmi le platine, le palladium, le rhodium et des mélanges de ceux-ci.

9. L'emploi d'une réplique, préparée selon le procédé des revendications 1 à 8, comme support catalytique, tamis moléculaire ou adsorbant.

**Patentansprüche**

1. Verfahren zur Darstellung einer integralförmigen Replikation eines geformten, porösen und löslichen Substratmaterials von einer solchen physikalischen Grössenordnung, Ausformung und scheinbaren Schüttdichte (ABD), dass es sich für den Einsatz als Adsorptionsmittel in einem Festbettadsorptionsverfahren eignet, wobei die Replikation die physikalische Ausformung und Grössenordnung des Substratmaterials sowie einen wesentlichen Anteil der Porenstruktur dupliziert und die Replikation im wesentlichen aus einem kohlenstoffhaltigen Pyropolymer mit sich wiederholenden Einheiten und einem Gehalt an wenigstens Kohlenstoff- und Wasserstoffatomen besteht und eine zwischen 25 und 100 % liegende Schüttdichte von jener des Substratmaterials aufweist, dadurch gekennzeichnet, dass das Verfahren die folgenden Stufen einschliesst:

(a) Behandlung des Substratmaterials mit einer organischen, pyrolysierbaren Vorläuferverbindung in einer reduzierenden Atmosphäre bei einer Temperatur im Bereich zwischen 400°—1200°C zur Pyrolyse der organischen Verbindung und Bildung des kohlenstoffhaltigen Pyropolymers mit sich wiederholenden Einheiten und einem Gehalt an wenigstens Kohlenstoff- und Wasserstoffatomen in der Porenstruktur des Substratmaterials,

(b) Fortsetzung der Behandlung gemäss Stufe (a) so lange, bis die gesamte Anreicherung an kohlenstoffhaltigem Pyropolymer in der Porenstruktur des Substratmaterials zur Erzielung einer Replikation von einer zwischen 0.5 und 14 kg liegenden Druckfestigkeit ausreichend ist und

(c) Gewinnung der integralförmigen, ein kohlenstoffhaltiges Pyropolymer mit sich wiederholenden Einheiten und einem Gehalt an wenigstens Kohlenstoff- und Wasserstoffatomen enthaltenden Replikation mittels Auslagen des Substratmaterials aus dem gemäss Stufe (b) erhältlichen Produkt in der Weise, dass besagtes Produkt mit einem Lösungsmittel für das Substratmaterial unter für das Herauslösen im wesentlichen des gesamten Substratmaterials ausgewählten Bedingungen in Berührung gebracht wird.

2. Verfahren nach Anspruch 1, dadurch gekennzeichnet, dass das Substratmaterial ein aus Aluminiumoxid, Siliziumdioxid und deren Gemischen ausgewähltes anorganisches Oxid mit grosser Oberfläche darstellt.

3. Verfahren nach den Ansprüchen 1 oder 2, dadurch gekennzeichnet, dass die organische, pyrolysierbare Vorläuferverbindung aus der Reihe Benzol, Cyclohexan, Dextrose und deren Gemischen ausgewählt sind.

4. Verfahren nach den Ansprüchen 1 bis 3, dadurch gekennzeichnet, dass sich an die Stufe (c) der Schritt

(d) anschliesst, der im Niederschlag wenigstens eines feuerfesten Oxids auf jeder Oberfläche der integralförmigen Replikation besteht.

5. Verfahren nach Anspruch 4, dadurch gekennzeichnet, dass sich an die Stufe (d) der Schritt

(e) anschliesst, der in der Entfernung des kohlenstoffhaltigen Pyropolymers mittels Oxidation besteht, wodurch sich eine zu gewinnende feuerfest- oxidförmige Replikation bildet.

6. Verfahren nach den Ansprüchen 4 oder 5, dadurch gekennzeichnet, dass das feuerfeste Oxid aus der Reihe Aluminiumoxid, Siliziumdioxid, Titan- und Zirkoniumoxid bzw. deren Gemischen ausgewählt ist.

7. Verfahren nach einem der Ansprüche 4 bis 6, dadurch gekennzeichnet, dass wenigstens ein katalytisch aktives Metall auf der Oberfläche des kohlenstoffhaltigen Pyropolymers oder feuerfesten Oxids niedergeschlagen wird.

8. Verfahren nach Anspruch 7, dadurch gekenn-

19    **0 089 425**    20

zeichnet, dass das katalytisch aktive Metall aus der Reihe Platin, Palladium und Rhodium bzw. deren Gemischen ausgewählt ist.

9. Verwendung einer nach den Verfahren gemäss den Ansprüchen 1 bis 8 dargestellten Replikation als Katalysatorträger, Molekularsieb oder Adsorptionsmittel.